# EUROPÄISCHE PATENTSCHRIFT

(11) **EP 2 435 274 B1**
(45) Veröffentlichungstag und Bekanntmachung des Hinweises auf die Patenterteilung: **10.07.2013**
(21) Anmeldenummer: 10724705.8
(22) Anmeldetag: 27.05.2010
(51) Int. Cl.: B60Q 1/00, B60Q 1/14, B60Q 5/00, B60R 11/02, B62D 1/04

(54) **LENKRAD MIT MITTELS EINER KLEBEVERBINDUNG AUFGEBRACHTEN HUPENKONTAKTEN**
STEERING WHEEL HORN CONTACTS ATTACHED WITH ADHESIVE
CONTACTS DE KLAXON FIXÉE AVEC ADHÉSIF POUR VOLANT DE DIRECTION

(30) Priorität: 29.05.2009 DE 102009023348
(43) Veröffentlichungstag der Anmeldung: 04.04.2012
(73) Patentinhaber: Autoliv Development AB, 447 83 Vårgårda (SE)
(72) Erfinder: NEBEL, Raimund, 86836 Obermeitingen (DE); MACKENSEN, Jürgen, 85221 Dachau (DE); BINKNUS, Karl, 86161 Augsburg (DE)
(74) Vertreter: Müller, Karl-Ernst
(86) Internationale Anmeldenummer: PCT/EP2010/003216
(87) Internationale Veröffentlichungsnummer: WO 2010/136197

(56) Entgegenhaltungen:
- WO-A1-2007/066513
- DE-A1- 4 016 047
- US-A- 5 723 834
- US-A- 5 934 702
- US-A1- 2002 074 780

## Beschreibung

Die Erfindung betrifft ein Lenkrad für ein Kraftfahrzeug mit einem daran angeordneten Airbagmodul sowie mit an dem Airbagmodul einerseits und an dem Lenkrad andererseits angeordneten Hupenkontakten, die in elektrischen Kontakt miteinander bringbar sind, um in einem Einbauzustand des Lenkrades in einem Kraftfahrzeug ein akustisches Hupsignal auszulösen, wobei die an dem Airbagmodul befindlichen Hupenkontakte aus wenigstens einer mittels einer Klebstoffschicht auf den vom Airbagmodul gebildeten Untergrund aufgebrachten, streifenförmig ausgebildeten und aus einer leitenden Folie bestehenden Materialbahn bestehen.

Ein Lenkrad nach dem Oberbegriff von Anspruch 1 mit den vorgenannten Merkmalen ist in der US 2002/0074780 A1 beschrieben. Dabei geht es darum, in ein Lenkrad Hupenkontakte zu integrieren, die bei Druckausübung auf das Lenkrad in Richtung der Lenksäule in einen elektrischen Kontakt miteinander gebracht werden und dadurch ein akustisches Hupsignal auslösen. Lässt der Druck auf das Lenkrad nach, so bewegen sich die Hupenkontakte aus ihrer Kontaktstellung heraus in eine Normalstellung, in der zwischen den Hupenkontakten kein elektrischer Kontakt vorliegt. Bei dem bekannten Lenkrad sind die Hupenkontakte als streifenförmige, aus einer leitenden Folie ausgeschnittene Materialbahnen ausgebildet und an der Rückseite des Gasgenerators und an der Rückseite des Trägers angeordnet. Soweit im Verlauf der Materialbahnen gesonderte Hupen-Kontaktstellen ausgebildet sind, ist im Bereich dieser Hupen-Kontaktstellen die Folie beispielsweise mittels eines doppelseitigen Klebebandes an dem Träger befestigt.

Auch bei den in den weiteren Druckschriften US 5,934,702 A, DE 40 16 047 A1 sowie US 5,723,834 A beschriebenen Lenkrädern sind die zur Ausbildung der Hupenkontakte vorgesehene Materialbahnen jeweils auf der Oberfläche des Airbagmoduls bzw. von Teilen davon angebracht.

Mit einer derartigen Anordnung der Materialbahnen zur Ausbildung von Hupenkontakten ist noch der Nachteil verbunden, dass bei sehr kurzen Betätigungswegen für die Hupe und daher einem entsprechend geringen Abstand des Lenkrades zu den auf der Oberfläche eines Airbagmoduls angeordneten Materialbahnen das Risiko besteht, dass das Lenkrad nicht nur im Bereich der Hupen-Kontaktstellen, sondern auch in anderen Bereichen der Materialbahnen in Kontakt mit den auf der Oberfläche des Airbagmoduls angebrachten Materialbahnen kommt, so dass Fehlfunktionen und Beschädigungen nicht auszuschließen sind.

Der Erfindung liegt daher die Aufgabe zugrunde, ein Lenkrad mit den eingangs genannten Merkmalen dahingehend zu verbessern, dass eine geschützte Anordnung der Materialbahnen gegeben ist.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass die Materialbahn auf dem Umfang des Airbagmoduls aufgebracht ist und die streifenförmige Materialbahn in Abständen zueinander angeordnete und auf die Oberfläche des Airbagmoduls umgeknickte Fortsätze aufweist und dass die Fortsätze der Materialbahn mittels sie durchgreifender und gleichzeitig eine Kontaktstelle mit dem am Lenkrad angeordneten Gegenkontakt bildender Kontaktnieten mit dem Airbagmodul verbunden sind. Mit der Erfindung ist der Vorteil verbunden, dass die Materialbahnen auf dem äußeren Umfang des Airbagmoduls und damit in einer gegenüber den Bewegungen des Lenkrades geschützten Stellung an dem Airbagmodul angebracht sind. Lediglich im Bereich der gewünschten Hupen-Kontaktstellen sind entsprechende Fortsätze auf die Oberfläche des Airbagmoduls umgeknickt und hier mittels Kontaktnieten mit dem Airbagmodul verbunden, so dass die für die Anbringung der Materialbahnen am Airbagmodul in an sich bekannter Weise benutzte Klebetechnik durch die Kontaktnieten unterstützt ist.

Soweit es je nach den konstruktiven Erfordernissen bei der Ausbildung von Hupenkontakten erforderlich sein kann, zur Stromeinspeisung oder zum Anschluss von weiteren elektrischen Funktionsteilen gesonderte Anschlussmöglichkeiten vorzusehen, ist nach einem Ausführungsbeispiel der Erfindung vorgesehen, dass die auf dem Umfang des Airbagmoduls verlaufende Materialbahn einstückig an ihr angeformte Ansätze zum Anschluss von elektrischen Funktionsteilen aufweisen. Hierbei kann vorgesehen sein, dass die betreffenden Ansätze in an mit dem Untergrund verbundene Steckergehäuse hineingeführt sind, oder dass die Ansätze als Erdungsbahnen ausgebildet und insoweit in den Untergrund integriert sind. Die Steckergehäuse können dabei einstückig mit dem Gehäuse des Airbagmoduls ausgebildet oder als gesonderte Teile mit dem Gehäuse verbunden sein. Weiterhin können die Ansätze zum Anschluss von weiteren Materialbahnen als Hupenkontakte eingerichtet sein, so dass je nach Größe von Airbagmodul beziehungsweise Lenkrad auch komplexere Netzwerke von Hupenkontakten geschaffen werden können.

Nach einem ersten Ausführungsbeispiel der Erfindung ist vorgesehen, dass die Klebstoffschicht an der leitenden Folie derart angebracht ist, dass die Folie selbstklebend auf dem Untergrund aufbringbar ist. Hiermit ist der Vorteil verbunden, dass die Hupenkontakte lediglich nach Entfernen einer in der Regel vorzusehenden Schutzfolie auf den Untergrund aufzulegen und an diesen anzudrücken sind, um die Befestigung zu bewirken.

Soweit in bestimmten Anwendungsfällen, beispielsweise bei einem metallischen Modulgehäuse, die Hupenkontakte gegen den dann elektrisch leitenden Untergrund isoliert werden müssen, ist nach einem Ausführungsbeispiel eine einfache Isolierung dadurch zu realisieren, dass die Klebstoffschicht bei einem elektrisch leitenden Untergrund aus einem elektrisch isolierenden Kleber besteht. In einer alternativen Ausführungsform kann vorgesehen sein, dass zur Ausbildung einer elektrischen Isolierung gegen den elektrisch leitenden Untergrund die leitende Folie mit einer elektrisch isolierenden Folie verklebt und die elektrisch isolierende Folie ihrerseits auf den Untergrund aufklebbar ist.

Nach einem Ausführungsbeispiel ist zur Herstellung der Hupenkontakte vorgesehen, dass die Materialbahn durch Ausschneiden einer festgelegten geometrischen Form aus der als Flächengebilde vorliegenden Folie hergestellt ist.

In der Zeichnung ist ein Ausführungsbeispiel der Erfindung wiedergegeben, welches nachstehend beschrieben ist. Es zeigen:
- Fig. 1: ein Airbagmodul mit einer auf dessen äußerem Umfang angeordneten Materialbahn in einer Perspektivansicht,
- Fig. 2: den Gegenstand der Figur 1 in einer anderen Ausführungsform.

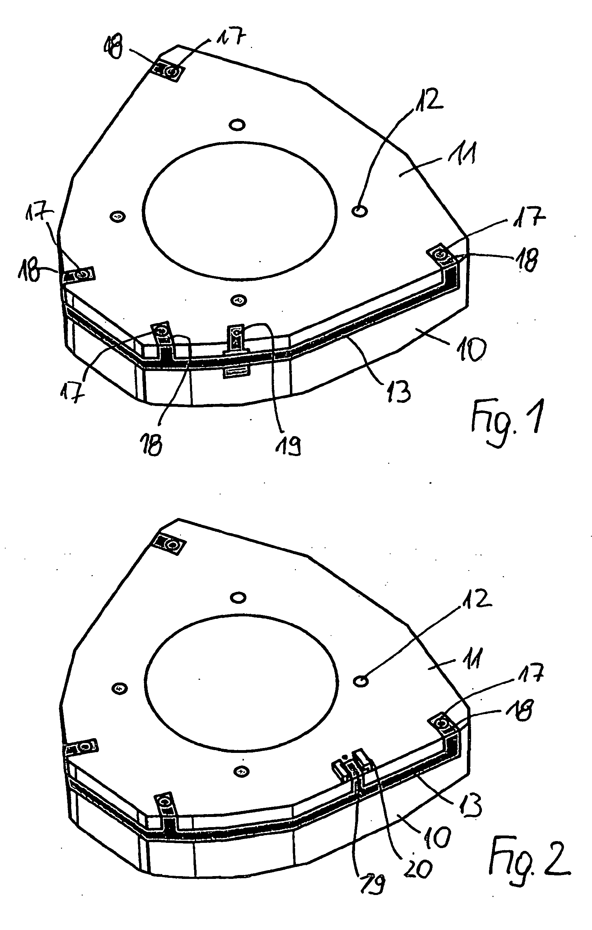

Bei dem in Figur 1 dargestellten Ausführungsbeispiel der Erfindung ist eine streifenförmig verlaufende und aus einer leitenden Folie bestehende Materialbahn 13 auf dem Umfang des mit Durchtrittslöchern 12 zur Aufnahme von der Befestigung eines Gasgenerators an dem Airbagmodul 10 dienenden Stehbolzen versehenen Airbagmoduls 10 mittels einer an sich bekannten Klebeverbindung angebracht, wobei die streifenförmige Materialbahn 13 in Abständen zueinander angeordnete Fortsätze 18 aufweist, die auf die Oberfläche 11 des Airbagmoduls 10 umgeknickt sind. In diese Fortsätze 18 sind bei dem in Figur 1 dargestellten'Ausführungsbeispiel zunächst Kontaktnieten 17 eingebracht, die auf der Oberfläche 11 des Airbagmoduls 10 mit dem an dem nicht dargestellten Lenkrad angebrachten Gegenkontakt zusammenwirken, wobei im Kontaktfall die außen um das Airbagmodul 10 umlaufende streifenförmige Materialbahn 13 für eine entsprechende elektrische Verbindung sorgen. Gleichzeitig kann ein Ansatz 19 an der streifenförmigen Materialbahn 13 ausgebildet sein, an den weitere elektrische Funktionsteile anschließbar sind.

Wie sich dazu beispielsweise aus Figur 2 ergibt, kann dieser Ansatz 19 beispielsweise in ein auf der Oberfläche 11 des Airbagmoduls 10 befindliches Steckergehäuse 20 hineingeführt sein, so dass über einen in das Steckergehäuse 20 einzusteckenden, nicht weiter dargestellten Stecker eine Anschlussmöglichkeit besteht, um elektrische Signale in die Materialbahn 13 einzuspeisen bzw. daraus abzugreifen.

## Patentansprüche

1. Lenkrad für ein Kraftfahrzeug mit einem daran angeordneten Airbagmodul (10) sowie mit an dem Airbagmodul (10) einerseits und an dem Lenkrad andererseits angeordneten Hupenkontakten, die in elektrischen Kontakt miteinander bringbar sind, um in einem Einbauzustand des Lenkrades in einem Kraftfahrzeug ein akustisches Hupsignal auszulösen, wobei die an dem Airbagmodul (10) befindlichen Hupenkontakte aus wenigstens einer mittels einer Klebstoffschicht auf den vom Airbagmodul (10) gebildeten Untergrund (11) aufgebrachten, streifenförmig ausgebildeten und aus einer leitenden Folie bestehenden Materialbahn (13) bestehen, **dadurch gekennzeichnet, dass** die Materialbahn (13) auf dem Umfang des Airbagmoduls (10) aufgebracht ist und die streifenförmige Materialbahn (13) in Abständen zueinander angeordnete und auf die Oberfläche (11) des Airbagmoduls (10) umgeknickte Fortsätze (18) aufweist und dass die Fortsätze (18) der Materialbahn (13) mittels sie durchgreifender und gleichzeitig eine Kontaktstelle mit dem am Lenkrad angeordneten Gegenkontakt bildender Kontaktnieten (17) mit dem Airbagmodul (10) verbunden sind.

2. Lenkrad nach Anspruch 1, **dadurch gekennzeichnet, dass** die auf dem Umfang des Airbagmoduls (10) verlaufende Materialbahn (13) einstückig an ihr angeformte Ansätze (19) zum Anschluss von elektrischen Funktionsteilen aufweist.

3. Lenkrad nach Anspruch 2, **dadurch gekennzeichnet, dass** die Ansätze (19) in ein mit dem Untergrund verbundenes Steckergehäuse (20) hineingeführt sind.

4. Lenkrad nach Anspruch 2, **dadurch gekennzeichnet, dass** die Ansätze (19) als Erdungsbahnen ausgebildet sind.

5. Lenkrad nach Anspruch 2, **dadurch gekennzeichnet, dass** die Ansätze (19) zum Anschluss von weiteren Materialbahnen eingerichtet sind.

6. Lenkrad nach einem der Ansprüche 1 bis 5, **dadurch gekennzeichnet, dass** die Klebstoffschicht an der leitenden Folie (13) derart angebracht ist, dass die Folie (13) selbstklebend auf dem Untergrund (11) aufbringbar ist.

7. Lenkrad nach einem der Ansprüche 1 bis 6, **dadurch gekennzeichnet, dass** die Klebstoffschicht (11) bei einem elektrisch leitenden Untergrund (11) aus einem elektrisch isolierenden Kleber besteht.

8. Lenkrad nach einem der Ansprüche 1 bis 6, **dadurch gekennzeichnet, dass** zur Ausbildung einer elektrischen Isolierung gegen den elektrisch leitenden Untergrund (11) die leitende Folie (13) mit einer elektrisch isolierenden Folie verklebt und die elektrisch isolierende Folie ihrerseits auf den Untergrund (11) aufklebbar ist.

9. Lenkrad nach einem der Ansprüche 1 bis 8, **dadurch gekennzeichnet, dass** die Materialbahn (13) durch Ausschneiden einer festgelegten geometrischen Form aus der als Flächengebilde vorliegenden Folie hergestellt ist.

## Claims

1. A steering wheel for a motor vehicle, with an airbag module (10) disposed thereon, and with horn contacts disposed on the airbag module (10) on one side and the steering wheel on the other side, which can be placed in electrical contact with one another in order to trigger an acoustic horn signal when the steering wheel is installed in a motor vehicle, wherein the horn contacts disposed on the airbag module (10) comprise at least one material web (13) designed in a strip-shaped manner and comprised of a conducting foil, the material web being applied by means of a layer of adhesive material to the substrate (11) formed by the airbag module (10), **characterised in that** the material web (13) is applied to the periphery of the airbag module (10), and the strip-shaped material web (13) has a plurality of continuations (18) which are separated by distances from each other and are bent over onto the surface (11) of the airbag module (10), and **in that** the continuations (18) of the material web (13) are attached to the airbag module (10) by means of contact rivets (17) which pass through said continuations forming at the same time a contact locus with a corresponding contact disposed on the steering wheel.

2. A steering wheel according to claim 1, **characterised in that** the material web (13) extending on the periphery of the airbag module (10) has a plurality of attachments (19) formed integrally on it, for connection of electrical functional elements.

3. A steering wheel according to claim 2, **characterised in that** the attachments (19) are inserted into a connector housing (20) connected to the substrate.

4. A steering wheel according to claim 2, **characterised in that** the attachments (19) are in the form of earthing strips.

5. A steering wheel according to claim 2, **characterised in that** the attachments (19) are arranged so as to be able to be connected to additional material webs.

6. A steering wheel according to one of claims 1-5, **characterised in that** the layer of adhesive material is applied to the conducting foil (13) such that the foil (13) can be applied to the substrate (11) in a self-adhesive manner.

7. A steering wheel according to one of claims 1-6, **characterised in that** the layer of adhesive material is comprised of an electrically insulating adhesive, in the case of an electrically conducting substrate (11).

8. A steering wheel according to one of claims 1-6, **characterised in that**, in order to form an electrical insulation against the electrically conducting substrate (11), the conducting foil (13) is adhesively bonded to an electrically insulating film, and the electrically insulating film in turn is fixable to the substrate (11) by means of an adhesive.

9. A steering wheel according to one of claims 1-8, **characterised in that** the material web (13) is fabricated by cutting out a fixed geometric form from the foil body which is in sheet form.

## Revendications

1. Volant de direction pour véhicule automobile présentant un module de coussin gonflable de sécurité (10) agencé sur celui-ci ainsi que des contacts de klaxon agencés sur le module de coussin gonflable de sécurité (10) d'une part et sur le volant de direction d'autre part, lesquels peuvent être mis en contact électrique entre eux pour pouvoir produire un signal d'avertissement acoustique lorsque le volant est à l'état monté dans un véhicule automobile, les contacts de klaxon se trouvant sur le module de coussin gonflable de sécurité (10) étant constitués d'au moins une bande de matière (13), composée d'une feuille conductrice et en forme de ruban, appliquée au moyen d'une couche adhésive sur le fond (11) qui est constitué par le module de coussin gonflable de sécurité (10), **caractérisé en ce que** la bande de matière (13) est appliquée sur la périphérie du module de coussin gonflable de sécurité (10) et la bande de matière (13) en forme de ruban présente des prolongements (18) qui sont repliés sur la surface (11) du module de coussin gonflable de sécurité (10) en étant espacés les uns des autres, et **en ce que** les prolongements (18) de la bande de matière (13) sont fixés sur le module de coussin gonflable de sécurité (10) au moyen de rivets de contact (17) qui les traversent en formant simultanément un point de contact avec le contact correspondant situé sur le volant.

2. Volant de direction selon la revendication 1, **caractérisé en ce que** la bande de matière (13) qui se prolonge sur la périphérie du module de coussin gonflable de sécurité (10) présente des attaches (19) constituées d'un seul tenant avec celle-ci, destinées à la connexion à des éléments fonctionnels électriques.

3. Volant de direction selon la revendication 2, **caractérisé en ce que** les attaches (19) sont introduites dans un boîtier de connecteur (20) relié avec le fond.

4. Volant de direction selon la revendication 2, **caractérisé en ce que** les attaches (19) sont conçues sous la forme de bandes de mise à la terre.

5. Volant de direction selon la revendication 2, **caractérisé en ce que** les attaches (19) sont agencées pour permettre la connexion d'autres bandes de matière.

6. Volant de direction selon l'une des revendications 1 à 5, **caractérisé en ce que** la couche adhésive est disposée sur la feuille conductrice (13) de manière que la feuille (13) puisse être appliquée de manière autocollante sur le fond (11).

7. Volant de direction selon l'une des revendications 1 à 6, **caractérisé en ce que**, dans le cas d'un fond (11) électroconducteur, la couche adhésive est constituée par un adhésif électriquement isolant.

8. Volant de direction selon l'une des revendications 1 à 6, **caractérisé en ce que**, pour créer une isolation électrique par rapport au fond électroconducteur (11), la feuille conductrice (13) est collée à une feuille électriquement isolante et la feuille électriquement isolante est, quant à elle, apte à être collée sur le fond (11).

9. Volant de direction selon l'une des revendications 1 à 8, **caractérisé en ce que** la bande de matière (13) est produite par découpage d'une forme géométrique déterminée dans la feuille conçue sous la forme d'une structure plane.
